# EUROPEAN PATENT APPLICATION

(11) **EP 4 072 206 A1**
(43) Date of publication of application: **12.10.2022**
(21) Application number: 21745166.5
(22) Date of filing: 15.01.2021
(51) Int. Cl.: H04W 52/14, H04W 84/12

(54) **COMMUNICATION METHOD AND APPARATUS FOR WIRELESS LOCAL AREA NETWORK**

(30) Priority: 21.01.2020 CN 202010072606
(71) Applicant: Huawei Technologies Co., Ltd., Shenzhen, Guangdong 518129, (CN)
(72) Inventor: HUANG, Guogang, Shenzhen, Guangdong 518129 (CN); GUO, Yuchen, Shenzhen, Guangdong 518129 (CN)
(74) Representative: Thun, Clemens
(86) International application number: PCT/CN2021/072256
(87) International publication number: WO 2021/147787

(57) **Abstract**

A wireless local area network communications method and apparatus are provided to improve communications quality of a wireless local area network. The method is as follows: A first station STA receives a first physical layer protocol data unit PPDU from a first access point AP, where the first PPDU includes a first preamble part, a second preamble part, and a data part. A second PPDU is sent by a second AP to a second STA, and a format of the second PPDU is the same as a format of the first PPDU. The first preamble part in the first PPDU is the same as a first preamble part in the second PPDU, but the second preamble part in the first PPDU is different from a second preamble part in the second PPDU. The first STA determines a receive power based on a preamble field in the first PPDU, where the preamble field includes one or more of the following fields: an extremely high-throughput short training field EHT-STF or an extremely high-throughput long training field EHT-LTF.

## Description

### CROSS-REFERENCE TO RELATED APPLICATIONS

This application claims priority to Chinese Patent Application No. 202010072606.1, filed with the China National Intellectual Property Administration on January 21, 2020 and entitled "WIRELESS LOCAL AREA NETWORK COMMUNICATIONS METHOD AND APPARATUS", which is incorporated herein by reference in its entirety.

### TECHNICAL FIELD

Embodiments of this application relate to the field of communications technologies, and in particular, to a wireless local area network communications method and apparatus.

### BACKGROUND

Data traffic rapidly grows with development of the mobile Internet and popularization of smart terminals. Wireless local area network (wireless local area network, WLAN) becomes one of the mainstream mobile broadband access technologies due to advantages such as a high rate and low costs.

How to improve WLAN communications quality is a problem that deserves attention.

### SUMMARY

Embodiments of this application provide a wireless local area network communications method and apparatus, to improve WLAN communications quality.

Specific technical solutions provided in embodiments of this application are as follows.

According to a first aspect, a wireless local area network WLAN communications method is provided, where the method includes the following steps: A first station STA receives a first physical layer protocol data unit PPDU from a first access point AP. The first STA determines a receive power based on a preamble field in the first PPDU, where the preamble field includes one or more of the following fields: an extremely high-throughput short training field EHT-STF or an extremely high-throughput long training field EHT-LTF. This method can be applied to more communications scenarios by determining the receive power by using the EHT-STF/EHT-LTF field. For example, in a multi-AP coordination scenario, first preamble parts sent by a plurality of APs are the same, and the first STA cannot estimate a path loss between the first STA and an associated AP based on a field in the first preamble part. The plurality of APs separately send different second preamble parts on different RUs, where the second preamble part includes the EHT-STF/EHT-LTF field. In this way, the first STA determines the receive power based on the EHT-STF/EHT-LTF field in a downlink PPDU. The first STA may determine the path loss between the first STA and the associated first AP, and further determine a power for sending an uplink PPDU to the first AP.

In a possible design, after the first STA determines the receive power, the first STA may further determine a path loss between the first STA and the first AP based on the receive power, and determine an uplink transmit power based on the path loss.

In a possible design, that the first STA determines a path loss between the first STA and the first AP based on the receive power may be implemented by using a first field in the first PPDU. Specifically, the first STA determines the path loss between the first STA and the first AP based on the receive power and the first field in the first PPDU. The first field includes an AP transmit power (AP Tx Power) field.

In a possible design, that the first STA determines an uplink transmit power based on the path loss may be implemented by using a second field in the first PPDU. Specifically, the first STA determines the uplink transmit power based on the path loss and the second field in the first PPDU. The second field includes an uplink target received signal strength indicator RSSI (UL Target RSSI) field.

In a possible design, the first STA receives the first PPDU from the first access point AP, and a receiving manner of the first PPDU may include the following manners: The first STA receives a first preamble part of the first PPDU on each channel element of the first channel, that is, first preamble parts received on each channel element of the first channel are the same. It is assumed that the first channel includes N channel elements. In other words, the first STA receives N repeatedly sent first preamble parts. The first preamble parts received on the first channel are a signal in which the N first preamble parts are superposed. The first STA receives, on a first resource unit RU of the first channel, a second preamble part and a first data part of the first PPDU, where the second preamble part includes the preamble field.

Optionally, the first STA determines a location of the first RU based on a third field in the first preamble part, that is, determines to receive the second preamble part and the first data part of the first PPDU on the first RU, where the third field includes an association identifier AID field of the first AP. The AID of the first AP is used to identify the first AP and distinguish between different APs. In the multi-AP coordination scenario, the first preamble parts sent by the plurality of APs are the same. In this way, the first STA may determine, based on the detected first preamble part in any PPDU, an RU on which required data needs to be received, that is, receive the required data on the first RU associated with the first AP.

In a possible design, the first preamble part includes one or more of the following fields: a legacy short training field L-STF, a legacy long training field L-LTF, a legacy signal L-SIG field, a repeated legacy signal RL-SIG field, an extremely high-throughput EHT signal A field or an EHT signal B field.

In a possible design, the first STA receives a first beacon frame from the first AP. The first beacon frame includes basic service set BSS information of the first AP. The BSS information includes a BSS color. The BSS information of the first AP is the same as BSS information of the second AP. The first STA determines whether to receive the downlink PPDU based on the BSS information of the first AP. In the multi-AP coordination scenario, BSS information of the plurality of APs is the same, and the first STA determines, based on the received BSS information, to receive the first PPDU.

In a possible design, the first STA performs frequency synchronization calibration based on a trigger frame in the first PPDU.

According to a second aspect, a wireless local area network communications method is provided. The method is implemented by the following steps: A primary coordination access point AP sends a first trigger frame to both a first AP and a second AP on a first channel. The first trigger frame is used to trigger the first AP and the second AP to send a downlink PPDU after a short frame interval SIFS after receiving the first trigger frame. The first trigger frame includes one or more of the following: a length of the downlink PPDU, a length of an uplink PPDU, information about a preamble part of the downlink PPDU, or information about a second trigger frame, where the downlink PPDU is a PPDU sent by the first AP to a first STA or a PPDU sent by the second AP to a second STA, and the uplink PPDU is a PPDU sent by the first STA to the first AP or a PPDU sent by the second STA to the second AP. The downlink PPDU includes the second trigger frame, and the second trigger frame is used to trigger the first STA or the second STA to send the uplink PPDU after the SIFS after the downlink PPDU ends. The first AP and the second AP can determine, based on the first trigger frame sent by the primary coordination AP, content and the length of the downlink PPDU to implement coordination between the plurality of APs. For example, when sending a same first preamble part, the first AP and the second AP can determine content of the first preamble part based on the first trigger frame sent by the primary coordination AP.

In a possible design, the information about the preamble part of the downlink PPDU includes one or more of the following fields: a legacy signal L-SIG field, an extremely high-throughput EHT signal A field, an EHT signal B field, or a quantity of extremely high-throughput long training fields EHT-LTFs.

According to a third aspect, a wireless local area network communications method is provided. The method includes the following steps: A first access point AP receives a first uplink frame from a first STA. The first AP returns a first acknowledgment ACK frame to the first STA, where a scrambler seed of the first ACK frame is the same as a scrambler seed of the first uplink frame. In a multi-AP coordination scenario, any AP may correctly receive an uplink frame sent by a STA. It is assumed that both the first AP and a second AP receive the first uplink frame sent by the first STA, and after receiving the first uplink frame, the first AP and the second AP return ACK frames after an SIFS. Scrambler seeds of the two ACK frames are the same as the scrambler seed of the first uplink frame. This can avoid interference to PPDUs of the two ACK frames caused by using different scrambling codes, and ensure that the STA can correctly receive the ACK frames.

In a possible design, the first uplink frame includes a basic service set BSS identifier, where the BSS identifier is used to identify the first AP and the second AP.

In a possible design, before the first AP receives the first uplink frame from the first STA, the first AP sends a first beacon frame to the first STA. The first beacon frame includes basic service set BSS information of the first AP, and the BSS information of the first AP is the same as BSS information of the second AP.

According to a fourth aspect, a communications apparatus is provided. The communications apparatus may be a station STA, which may be denoted as a first STA, may be an apparatus (for example, a chip, a chip system, or a circuit) in a STA, or an apparatus that can be used with a STA. In a design, the communications apparatus may include a module that is in a one-to-one correspondence with the methods/operations/steps/actions described in the first aspect. The modules may be implemented by a hardware circuit, software, or a combination of a hardware circuit and software. In a design, the communications apparatus may include a processing module and a communications module. The processing module is configured to invoke the communications module to perform a receiving function and/or a sending function.

For example, the communications module is configured to receive a first physical layer protocol data unit PPDU from a first access point AP. The processing module is configured to determine a receive power based on a preamble field in the first PPDU, where the preamble field includes one or more of the following fields: an extremely high-throughput short training field EHT-STF or an extremely high-throughput long training field EHT-LTF. For beneficial effects, refer to effects corresponding to the first aspect. Details are not described herein again.

In a possible design, after the processing module determines the receive power, the processing module is further configured to determine a path loss between the first STA and the first AP based on the receive power, and determine an uplink transmit power based on the path loss.

In a possible design, that the processing module determines a path loss between the first STA and the first AP based on the receive power may be implemented by using a first field in the first PPDU. Specifically, the processing module is configured to determine the path loss between the first STA and the first AP based on the receive power and the first field in the first PPDU. The first field includes an AP transmit power (AP Tx Power) field.

In a possible design, that the processing module determines an uplink transmit power based on the path loss may be implemented by using a second field in the first PPDU. Specifically, the processing module determines the uplink transmit power based on the path loss and the second field in the first PPDU. The second field includes an uplink target received signal strength indicator RSSI (UL Target RSSI) field.

In a possible design, when the communications module receives the first PPDU from the first access point AP, a specific receiving manner may include the following: The communications module receives a first preamble part of the first PPDU on each channel element of the first channel, that is, first preamble parts received on each channel element of the first channel are the same. It is assumed that the first channel includes N channel elements. In other words, the communications module receives N repeatedly sent first preamble parts. The first preamble parts received on the first channel are a signal in which the N first preamble parts are superposed. The communications module receives, on a first resource unit RU of the first channel, a second preamble part and a first data part of the first PPDU, where the second preamble part includes the preamble field.

Optionally, the processing module is further configured to determine a location of the first RU based on a third field in the first preamble part, that is, determine to receive the second preamble part and the first data part of the first PPDU on the first RU, where the third field includes an association identifier AID field of the first AP. The AID of the first AP is used to identify the first AP and distinguish between different APs. In a multi-AP coordination scenario, first preamble parts sent by a plurality of APs are the same. In this way, the first STA may determine, based on the detected first preamble part in any PPDU, an RU to receive required data. In other words, the first STA receives the required data on the first RU associated with the first AP.

In a possible design, the first preamble part includes one or more of the following fields: a legacy short training field L-STF, a legacy long training field L-LTF, a legacy signal L-SIG field, a repeated legacy signal RL-SIG field, an extremely high-throughput EHT signal A field or an EHT signal B field.

In a possible design, the communications module is further configured to receive a first beacon frame from the first AP. The first beacon frame includes basic service set BSS information of the first AP. The BSS information includes a BSS color. The BSS information of the first AP is the same as BSS information of the second AP. The first STA determines whether to receive the downlink PPDU based on the BSS information of the first AP. In a multi-AP coordination scenario, BSS information of the plurality of APs is the same, and the first STA determines, based on the received BSS information, to receive the first PPDU.

In a possible design, the processing module is further configured to perform frequency synchronization calibration based on a trigger frame in the first PPDU.

According to a fifth aspect, a communications apparatus is provided. The communications apparatus may be an AP, for example, a primary coordination AP in a multi-AP coordination, or may be an apparatus (for example, a chip, a chip system, or a circuit) in an AP or an apparatus that can be used with an AP. In a design, the communications apparatus may include a module that is in a one-to-one correspondence with the methods/operations/steps/actions described in the second aspect. The modules may be implemented by a hardware circuit, software, or a combination of a hardware circuit and software. In a design, the apparatus may include a processing module and a communications module. The processing module is configured to invoke the communications module to perform a receiving function and/or a sending function.

For example, the processing module is configured to invoke the communications module to send a first trigger frame to both a first AP and a second AP on a first channel. The first trigger frame is used to trigger the first AP and the second AP to send a downlink PPDU after a short frame interval SIFS after receiving the first trigger frame. The first trigger frame includes one or more of the following: a length of the downlink PPDU, a length of an uplink PPDU, information about a preamble part of the downlink PPDU, or information about a second trigger frame, where the downlink PPDU is a PPDU sent by the first AP to a first STA or a PPDU sent by the second AP to a second STA, and the uplink PPDU is a PPDU sent by the first STA to the first AP or a PPDU sent by the second STA to the second AP. The downlink PPDU includes the second trigger frame, and the second trigger frame is used to trigger the first STA or the second STA to send the uplink PPDU after the SIFS after the downlink PPDU ends. For beneficial effects, refer to effects corresponding to the second aspect. Details are not described herein again.

In a possible design, the information about the preamble part of the downlink PPDU includes one or more of the following fields: a legacy signal L-SIG field, an extremely high-throughput EHT signal A field, an EHT signal B field, or a quantity of extremely high-throughput long training fields EHT-LTFs.

According to a sixth aspect, a communications apparatus is provided. The communications apparatus may be an AP, may be denoted as a first AP, or may be an apparatus (for example, a chip, a chip system, or a circuit) in an AP or an apparatus that can be used with an AP. In a design, the communications apparatus may include a module that is in a one-to-one correspondence with the methods/operations/steps/actions described in the first aspect. The modules may be implemented by a hardware circuit, software, or a combination of a hardware circuit and software. In a design, the communications apparatus may include a processing module and a communications module. The processing module is configured to invoke the communications module to perform a receiving function and/or a sending function. For example, the communications module may further include a receiving module and a sending module.

The receiving module is configured to receive a first uplink frame from a first STA. The sending module is configured to return a first acknowledgment ACK frame to the first STA, where a scrambler seed of the first ACK frame is the same as a scrambler seed of the first uplink frame. In a multi-AP coordination scenario, any AP may correctly receive an uplink frame sent by a STA. It is assumed that both the first AP and a second AP receive the first uplink frame sent by the first STA, and after receiving the first uplink frame, the first AP and the second AP return ACK frames after an SIFS. Scrambler seeds of the two ACK frames are the same as the scrambler seed of the first uplink frame. This can avoid interference to PPDUs of the two ACK frames caused by using different scrambling codes, and ensure that the STA can correctly receive the ACK frames.

In a possible design, the first uplink frame includes a basic service set BSS identifier, where the BSS identifier is used to identify the first AP and the second AP.

In a possible design, before the receiving module receives the first uplink frame from the first STA, the sending module is further configured to send a first beacon frame to the first STA. The first beacon frame includes basic service set BSS information of the first AP, and the BSS information of the first AP is the same as BSS information of the second AP.

According to a seventh aspect, an embodiment of this application provides a communications apparatus. The communications apparatus includes a communications interface and a processor. The communications interface is used by the apparatus to communicate with another device, for example, to send and receive data or a signal. For example, the communications interface may be a transceiver, a circuit, a bus, a module, or a communications interface of another type, and the another device may be an AP. The processor is configured to invoke a group of programs, instructions, or data to perform the method described in the first aspect. The apparatus may further include a memory, configured to store the programs, the instructions, or the data invoked by the processor. The memory is coupled to the processor, and when executing the instructions or the data stored in the memory, the processor can implement the method described in the first aspect.

According to an eighth aspect, an embodiment of this application provides a communications apparatus. The communications apparatus includes a communications interface and a processor. The communications interface is used by the communications apparatus to communicate with another device, for example, to send and receive data or a signal. For example, the communications interface may be a transceiver, a circuit, a bus, a module, or a communications interface of another type, and the another device may be a station STA. The processor is configured to invoke a group of programs, instructions, or data, to perform the method described in the second aspect or the third aspect. The communications apparatus may further include a memory, configured to store the programs, the instructions, or the data invoked by the processor. The memory is coupled to the processor, and when executing the instructions or the data stored in the memory, the processor can implement the method described in the second aspect or the third aspect.

According to a ninth aspect, an embodiment of this application further provides a computer-readable storage medium, including instructions. When the instructions are run on a computer, the computer is enabled to perform the method according to any one of the first aspect or the possible designs of the first aspect.

According to a tenth aspect, an embodiment of this application further provides a computer-readable storage medium, including instructions. When the instructions are run on a computer, the computer is enabled to perform the method according to any one of the second aspect or the possible designs of the second aspect.

According to an eleventh aspect, an embodiment of this application further provides a computer-readable storage medium, including instructions. When the instructions are run on a computer, the computer is enabled to perform the method according to any one of the third aspect or the possible designs of the third aspect.

According to a twelfth aspect, an embodiment of this application provides a chip system. The chip system includes a processor, and may further include a memory. The chip system is configured to implement the method according to any one of the first aspect or the possible designs of the first aspect. The chip system may include a chip, or may include a chip and another discrete device.

According to a thirteenth aspect, an embodiment of this application provides a chip system. The chip system includes a processor, and may further include a memory. The chip system is configured to implement the method according to any one of the second aspect or the possible designs of the second aspect. The chip system may include a chip, or may include a chip and another discrete device.

According to a fourteenth aspect, an embodiment of this application provides a chip system. The chip system includes a processor, and may further include a memory. The chip system is configured to implement the method according to any one of the third aspect or the possible designs of the third aspect. The chip system may include a chip, or may include a chip and another discrete device.

According to a fifteenth aspect, a computer program product is provided, including instructions, where when the computer program product runs on a computer, the computer is enabled to perform the method according to any one of the foregoing aspects or the possible designs of the foregoing aspects.

### BRIEF DESCRIPTION OF DRAWINGS

FIG. 1 is a first schematic diagram of an architecture of a WLAN system according to an embodiment of this application;
FIG. 2 is a second schematic diagram of an architecture of a WLAN system according to an embodiment of this application;
FIG. 3 is a schematic diagram of a frame structure of a downlink PPDU according to an embodiment of this application;
FIG. 4 is a first schematic diagram of a downlink PPDU sending process according to an embodiment of this application;
FIG. 5 is a schematic flowchart of a second communications method in a wireless local area network according to an embodiment of this application;
FIG. 6 is a schematic flowchart of a communications method in a multi-AP coordination scenario according to an embodiment of this application;
FIG. 7 is a schematic flowchart of a third communications method in a wireless local area network according to an embodiment of this application;
FIG. 8 is a second schematic diagram of a downlink PPDU sending process according to an embodiment of this application;
FIG. 9 is a schematic flowchart of a fourth communications method in a wireless local area network according to an embodiment of this application;
FIG. 10 is a schematic diagram of a manner 1 in which a plurality of APs send a beacon frame according to an embodiment of this application;
FIG. 11 is a schematic diagram of a manner 2 in which a plurality of APs send a beacon frame according to an embodiment of this application;
FIG. 12 is a schematic diagram of a structure of a communications apparatus according to an embodiment of this application; and
FIG. 13 is a schematic diagram of a structure of another communications apparatus according to an embodiment of this application.

### DESCRIPTION OF EMBODIMENTS

Embodiments of this application provide a wireless local area network communications method and apparatus, to resolve inter-cell interference caused when a plurality of access points (access point, AP) perform transmission by using an OFDMA technology. The method and the apparatus are conceived based on a same or similar technical concept. The method and the apparatus have similar principles for resolving the problems. Therefore, for implementation of the apparatus and the method, refer to each other. Details of repeated parts are not described. In description of embodiments of this application, the term "and/or" describes an association relationship between associated objects and indicates that three relationships may exist. For example, A and/or B may indicate the following three cases: Only A exists, both A and B exist, and only B exists. The character "/" generally represents an "or" relationship between associated objects. In this application, "at least one" means one or more, and "a plurality of' means two or more. In addition, it should be understood that, in the description of this application, terms such as "first", "second", and "third" are merely used to distinguish the purpose of the description, but cannot be understood as an indication or implication of relative importance, or as an indication or implication of a sequence. Reference to "an embodiment", "some embodiments", or the like described in this specification indicates that one or more embodiments of this application include a specific feature, structure, or characteristic described with reference to embodiments. Therefore, statements, such as "in an embodiment", "in some embodiments", "in some other embodiments", and "in other embodiments", that appear at different places in this specification do not necessarily mean referring to a same embodiment. Instead, the statements mean "one or more but not all of the embodiments", unless otherwise specifically emphasized in another manner. The terms "include", "comprise", "have", and their variants all mean "include but are not limited to", unless otherwise specifically emphasized.

The wireless local area network communications method provided in embodiments of this application may be applied to a fourth generation (4th generation, 4G) communications system, for example, a long term evolution (long term evolution, LTE), or may be applied to a fifth generation (5th generation, 5G) communications system, for example, 5G new radio (new radio, NR), or applied to various future communications systems.

The wireless local area network communications method provided in embodiments of this application may be further applicable to a wireless local area network (wireless local area network, WLAN) system, or an IEEE 802.11 system standard, for example, the IEEE 802.11ax standard, or a next-generation or further-generation standard of the IEEE 802.1 1ax standard, and may also be applicable to wireless local area network systems including but not limited to an Internet of Things (Internet of Things, IoT) network or a vehicle-to-everything (vehicle-to-everything, V2X) network.

The following describes in detail embodiments of this application with reference to the accompanying drawings.

A WLAN system 100 to which embodiments of this application may be applicable may include one or more APs and one or more stations (station, STA).

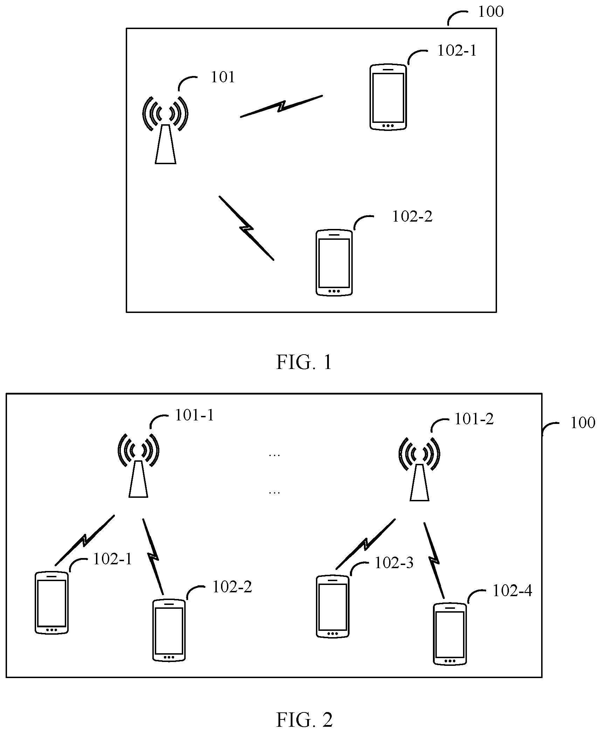

In FIG. 1, one AP 101 and two STAs are used as an example, and the two STAs are represented by a STA 102-1 and a STA 102-1. The AP 101 is associated with the STA 102-1 and the STA 102-1.

As shown in FIG. 2, the WLAN system 100 may also include a plurality of APs. FIG. 2 shows two APs, and an example in which each AP is connected to two STAs is used. It may be understood that the WLAN system may further include more APs and more STAs.

The two APs are: an AP 101-1 and an AP 101-2. The AP 101-1 is connected to two STAs, which are represented by STA 102-1 and STA 102-2. The AP 101-2 is connected to two STAs, which are represented by STA 102-3 and STA 102-4.

The following describes the AP and the STA designed in embodiments of this application.

The AP may also be referred to as a wireless access point, a bridge, or a hotspot. The AP can access a server or a communications network. The AP itself is also a station. The AP is an apparatus deployed in a wireless communications network or a WLAN network to provide a wireless communications function for a station associated with the AP. The AP may be used as a hub of the WLAN system. The AP may be a base station, a router, a gateway, a repeater, a communications server, a switch, a bridge, or the like. The base station may include a macro base station, a micro base station, a relay station, and the like in various forms. For ease of description herein, the foregoing devices are collectively referred to as APs in embodiments of this application.

The STA may be various user terminals, user apparatuses, access apparatuses, subscriber stations, subscriber units, mobile stations, user agents, user equipments, or other devices that have a wireless communications function. The user terminals may include various handheld devices, vehicle-mounted devices, wearable devices, computing devices that have a wireless communications function, or another processing device connected to a wireless modem, and include various forms of user equipments (user equipment, UE), mobile stations (mobile station, MS), and terminals (terminal), terminal devices (terminal equipment), portable communications devices, handheld devices, portable computing devices, entertainment devices, game devices or systems, global positioning system devices, or any other suitable device configured to perform network communication via wireless media, or the like. For ease of description herein, the foregoing devices are collectively referred to as STAs in embodiments of this application.

Based on the foregoing description, the following describes in detail a first communications method in a wireless local area network provided in embodiments of this application.

In this embodiment of this application, a structure of a downlink physical layer protocol data unit (physical layer protocol data unit, PPDU) is described as follows.

A PPDU sent by an AP to an associated STA is called a downlink PPDU. In this embodiment of this application, the downlink PPDU may include a preamble (preamble) part (part) and a data (data) part, and the preamble part may further include a first preamble part and a second preamble part. The preamble part includes some preamble fields. The data part may include a data field.

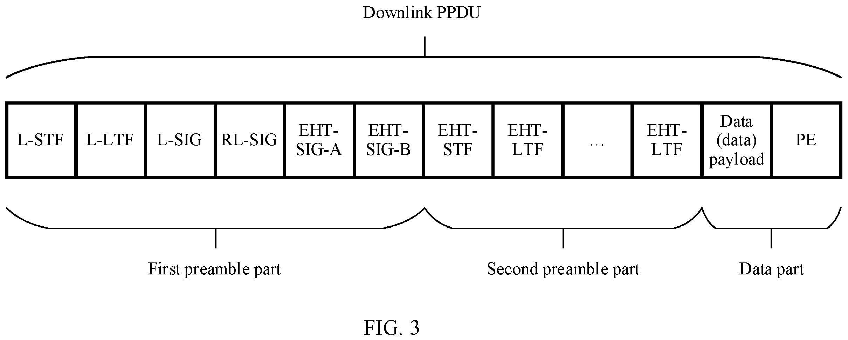

As shown in FIG. 3, a field that may be included in a frame structure of a downlink PPDU is described as an example.

A first preamble part includes a legacy short training field (legacy short training field, L-STF), a legacy long training field (legacy long training field, L-LTF), a legacy signal (legacy signaling, L-SIG) field, a repeated legacy signal (repeated legacy signaling, RL-SIG) field, an extremely high-throughput signal A (extremely high-throughput signaling A, EHT-SIG-A) field, and an extremely high-throughput signal B (extremely high-throughput signaling B, EHT-SIG-B) field. In actual application, the first preamble part may further include more or fewer fields.

A second preamble part includes an extremely high-throughput short training field (extremely high-throughput short training field, EHT-STF) and an extremely high-throughput long training field (extremely high-throughput long training field, EHT-LTF).

A data part may include two parts: a data (data) payload and a packet extension (packet extension, PE). The data payload part is used to carry data sent to the STA.

The downlink PPDU may further include a trigger frame (trigger frame). Generally, the trigger frame is included in the data part, and may be aggregated with data.

To greatly improve a service transmission rate of a WLAN system, the next generation Institute of Electrical and Electronics Engineers (institute of electrical and electronics engineers, IEEE) 802.11ax standard further uses an orthogonal frequency division multiple access (orthogonal frequency division multiple access, OFDMA) technology based on an orthogonal frequency division multiplexing (orthogonal frequency division multiplexing, OFDM) technology. The OFDMA technology divides a time-frequency resource of an air interface radio channel into a plurality of orthogonal time-frequency resource units (resource unit, RU). RUs may be shared in time, and may be orthogonal in frequency domain. When a single AP needs to transmit data to a STA, resource allocation is performed based on RUs or RU groups. Different channel resources are allocated to different STAs at the same time, so that a plurality of STAs can access a channel efficiently and channel utilization is improved.

With the popularity of WLAN technologies, APs become denser. When a plurality of APs use the OFDMA technology, more inter-cell interference is inevitably caused. Multi-AP coordination means that the plurality of APs exchange information to achieve parallel transmission, avoid interference, or optimize transmission resource configuration. The multi-AP coordination can effectively reduce the inter-cell interference by using the OFDMA technology.

In a multi-AP coordination scenario, the plurality of APs may send the preamble part and the data part in the following manner.

For any AP in the multi-AP coordination, the AP repeatedly sends the first preamble part on each channel element of a channel, and sends the second preamble part and the data part on a resource associated with a receive - end STA in the channel.

For example, the plurality of APs include a first AP and a second AP. The following describes a manner in which a PPDU is sent in the multi-AP coordination scenario by using the first AP and the second AP to coordinately send the downlink PPDU. In the following description, the first AP is associated with a first STA, and the second AP is associated with a second STA. The first STA is any STA associated with the first AP, and the second STA is any STA associated with the second AP.

The first AP sends a first PPDU to the first STA, and the second AP sends a second PPDU to the second STA. A manner in which fields in the first PPDU and the second PPDU occupy resources is described as follows.

It is assumed that the first AP and the second AP send downlink PPDUs on a first channel. A full bandwidth of the first channel includes one or more channel elements. The channel element may also be referred to as a sub-channel. For example, the full bandwidth of the first channel is 80 MHz, the first channel includes four channel elements, and a bandwidth of the channel element is 20 MHz. For another example, the full bandwidth of the first channel is 80 MHz, the first channel includes two channel elements, and a bandwidth of the channel element is 40 MHz. The full bandwidth of the first channel is 40 MHz, the first channel includes two channel elements, and a bandwidth of the channel element is 20 MHz. The full bandwidth of the first channel may include a plurality of frequency resource units (resource unit, RU). For example, in the OFDMA technology, a channel bandwidth is divided into a plurality of orthogonal RUs. Alternatively, the full bandwidth of the first channel may include a plurality of time-frequency resource blocks (resource block, RB). This application uses an RU as an example for description.

A first preamble part of the first PPDU is sent on an entire bandwidth/full bandwidth of the first channel. For example, the first AP repeatedly sends the first preamble part of the first PPDU on each channel element of the first channel. A second preamble part and a data part of the first PPDU are sent on a first RU/first RU group of the first channel. The first RU group includes a plurality of RUs.

A first preamble part of the second PPDU is sent on the entire bandwidth/full bandwidth of the first channel. For example, the second AP repeatedly sends the first preamble part of the first PPDU on each channel element of the first channel. A second preamble part and a data part of the second PPDU are sent on a second RU/second RU group of the first channel. The second RU group includes a plurality of RUs.

It can be learned that both the first preamble part of the first PPDU and the first preamble part of the second PPDU are repeatedly sent on the full bandwidth of the first channel at a granularity of channel elements. If different first preamble parts are sent on a same channel, interference is generated. Therefore, in this embodiment of this application, the first preamble part of the first PPDU is the same as the first preamble part of the second PPDU. The meaning of "same" may be understood as that fields and field content included in the first preamble part of the first PPDU and the first preamble part of the second PPDU are the same. STAs that receive the first PPDU and the second PPDU can identify a same meaning by using the first preamble part. The first AP and the second AP repeatedly send the first preamble part on the full bandwidth of the first channel at the granularity of channel elements, and signals of a plurality of first preamble parts are superposed together.

Parts other than the first preamble part of the first PPDU and parts of the second PPDU are sent on different RUs. Parts other than the first preamble part of the first PPDU and the second PPDU may be different. Different meanings may be understood as that fields/field content included in parts other than the first preamble part of the first PPDU and the second PPDU are different.

According to the design of the first preamble part for sending the downlink PPDU by each AP, when the plurality of APs use the OFDMA technology, interference caused by sending the PPDU by the plurality of APs can be reduced. According to the design of the second preamble part and the data part for each AP to send the downlink PPDU, different APs can send the downlink PPDU on different RUs. This avoids interference caused by sending the PPDU on the same RU by the plurality of APs. In addition, parts of the first PPDU and the second PPDU other than the first preamble part are sent on different RUs. RU-level OFDMA transmission can be implemented when complexity and signaling overheads are relatively low, and coordinated transmission can be performed more flexibly and efficiently by using a channel resource.

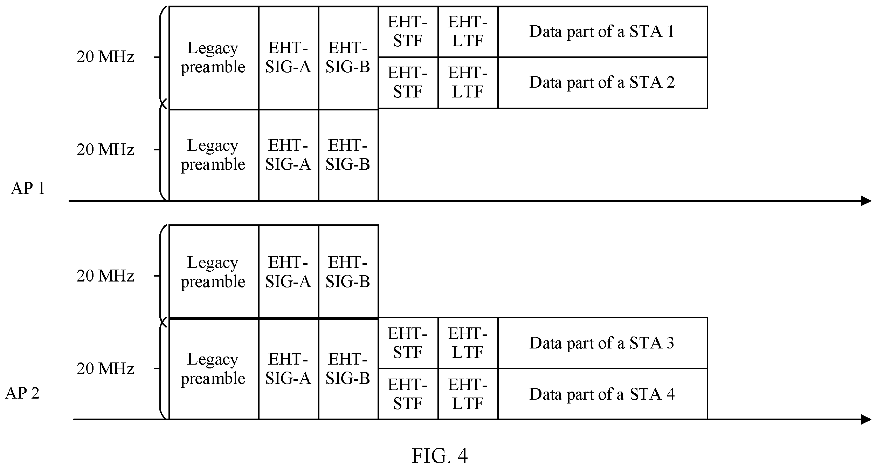

As shown in FIG. 4, sending a downlink PPDU is described below by using an example.

For example, a full bandwidth of a first channel is 40 MHz. A bandwidth of a channel element is 20 MHz, and the first channel includes two channel elements, denoted as a channel element 1 and a channel element 2. An AP 1 and an AP 2 are two different APs and cooperatively send a PPDU. The AP 1 is associated with a STA 1 and a STA 2. The AP 1 is associated with a STA 3 and a STA 4. For a format of the downlink PPDU, refer to related description in FIG. 3.

The AP 1 sends a first preamble part of a first PPDU on both the channel element 1 and the channel element 2, and separately sends a second preamble part and a data part of the first PPDU to the STA 1 and the STA 2 on different RUs of the channel element 1. Certainly, the second preamble part and the data part that are sent to the STA 1 may be different from the second preamble part and the data part that are sent to the STA 2.

Similarly, the AP 2 sends a first preamble part of a second PPDU on both the channel element 1 and the channel element 2, and separately sends a second preamble part and a data part of the second PPDU to the STA 3 and the STA 4 on different RUs of the channel element 2. Certainly, the second preamble part and the data part that are sent to the STA 3 may be different from the second preamble part and the data part that are sent to the STA 4.

It may be understood that the channel element 1 may carry data sent by the AP 1 to more STAs, and the channel element 2 may carry data sent by the AP 2 to more STAs. The second preamble part and the data part of the first PPDU are sent to the STA 1 and the STA 2, so that the channel element 1 may not be fully occupied. The second preamble part and the data part of the second PPDU are sent to the STA 3 and the STA 4, so that the channel element 2 may not be fully occupied.

In this embodiment of this application, a plurality of APs repeatedly send a same first preamble part on each channel element on a full bandwidth of the channel, and different APs send, on different RUs of the channel, a second preamble part and a data part to STAs associated with the different APs, so that interference between the plurality of APs can be avoided. In addition, OFDMA transmission is coordinated at a granularity of RUs, and channel usage efficiency is improved.

In this embodiment of this application, the plurality of APs send the same first preamble part, and an EHT-SIG-B in the first preamble part includes allocation information of an RU. The RU may be allocated to a STA, and the allocation information of the RU may include a user AID of the STA. The RU may further be allocated to a plurality of STAs, and the allocation information of the RU may include multicast AIDs corresponding to the plurality of STAs. The RU may be allocated to all STAs associated with one BSS, and the allocation information of the RU may include an AID of the BSS. After the AP sends the downlink PPDU to the STA, the STA may determine, by using the EHT-SIG-B in the first preamble part, an RU or RU group to receive the second preamble part and the data part. For example, the STA may obtain, in advance, a BSS associated with the STA, determine an RU corresponding to the BSS associated with the STA based on the EHT-SIG-B in the first preamble part, and receive the second preamble part and the data part on the determined RU.

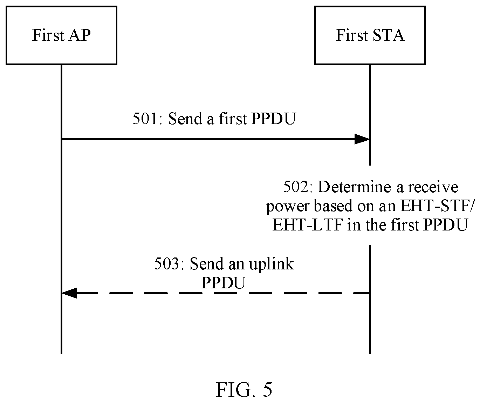

As shown in FIG. 5, an embodiment of this application further provides a second communications method in a wireless local area network. The method may be combined with the foregoing first communications method in a wireless local area network, or may independently form a solution that needs to be protected in this application.

S501: A first AP sends a first PPDU to a first STA. The first STA receives the first PPDU from the first AP.

S502: The first STA determines a receive power based on a preamble field in the first PPDU.

The preamble field may be an EHT-STF, an EHT-LTF, or a combination of the EHT-STF and the EHT-LTF.

The receive power is a power at which the first STA receives the first PPDU of the first AP.

The first STA may determine a path loss between the first STA and the first AP based on the receive power, and then determine an uplink transmit power based on the path loss.

Optionally, after S502, S503 may be further included.

S503: The first STA sends an uplink PPDU to the first AP.

A format of the uplink PPDU is not limited in this application. For example, refer to a format of a downlink PPDU.

Optionally, the first STA may send the uplink PPDU based on the uplink transmit power determined in the foregoing method.

The first PPDU may include a trigger frame (trigger frame). The trigger frame includes a first field. For example, the first field may be an AP transmit power (AP Tx power) field. After determining the receive power based on the preamble field, the first STA may determine the path loss between the first STA and the first AP based on the receive power and the AP TX power field. For example, the receive power is subtracted from a power value indicated by the AP TX power field, to obtain a path loss value.

The trigger frame may further include a second field. For example, the first field may be an uplink target (UL Target) received signal strength indicator (received signal strength indication, RSSI) field. The first STA may determine the uplink transmit power based on the path loss and the UL Target RSSI field. For example, the uplink transmit power (dB) = path loss (dB) + UL Target RSSI (dB), where dB is a power unit.

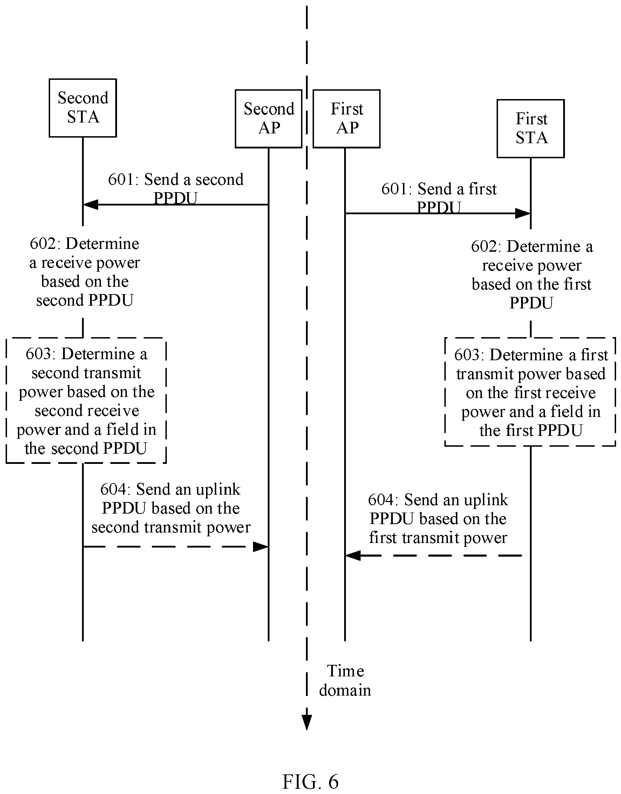

With reference to the description of the embodiment in FIG. 5, in a multi-AP coordination scenario, for operations of a second AP and an associated second STA, refer to operations of the first AP and the first STA. As shown in FIG. 6, a communications method in a multi-AP coordination scenario is described as follows.

S601: A first AP sends a first PPDU to a first STA. The first STA receives the first PPDU from the first AP. A second AP sends a second PPDU to a second STA. The second STA receives the second PPDU from the second AP.

Optionally, a manner in which the first AP sends the first PPDU and the second AP sends the second PPDU may use the method described in the foregoing first communications method in a wireless local area network.

It should be noted that, based on a working principle of a transceiver, "simultaneity" in this application is essential, and two pieces of information are not strictly limited to be sent without any time difference, and the two pieces of information only need to be sent in a substantially same time dimension. This note applies to the entire application document.

S602: The first STA determines a first receive power based on the first PPDU. A second STA determines a second receive power based on a second PPDU.

For a method for determining the receive power by the first STA and the second STA, refer to the description of determining the receive power in FIG. 5.

Optionally, the method may further include the following steps.

S603: The first STA determines a first transmit power based on the first receive power and a field in the first PPDU. The second STA determines a second transmit power based on the second receive power and a field in the second PPDU.

S604: The first STA may send an uplink PPDU to the first AP based on the first transmit power. The second STA may send an uplink PPDU to the second AP based on the second transmit power.

Generally, the first PPDU may include a trigger frame, and the second PPDU may also include the trigger frame. The trigger frame may include an AP TX Power field and a UL Target RSSI field.

Optionally, the first STA may estimate the first receive power based on a first preamble part (for example, an EHT-STF/EHT-LTF field) in the first PPDU. The first STA calculates a path loss (pathloss) between the first STA and the first AP based on the first receive power and the AP TX Power field in the first PPDU, and determines a first uplink transmit power based on the estimated path loss and the UL Target RSSI field in the first PPDU.

Similarly, the second STA may estimate the second receive power based on a first preamble part (for example, an EHT-STF/EHT-LTF field) in the second PPDU. The second STA calculates a path loss (pathloss) between the second STA and the second AP based on the second receive power and the AP TX Power field in the second PPDU, and determines a second uplink transmit power based on the estimated path loss and the UL Target RSSI field in the second PPDU.

When the first PPDU and the second PPDU include the trigger frame, the first STA and the second STA separately send an uplink trigger-frame-based PPDU (trigger-based PPDU) based on the trigger frame. For example, after receiving the trigger frame, the first STA and the second STA separately send the uplink PPDU after an SIFS.

Optionally, power values indicated by the AP TX Power field in the first PPDU and the AP TX Power field in the second PPDU may be different.

When first preamble parts sent by a plurality of APs are the same, the STA cannot estimate a path loss between the STA and an associated AP based on a field in the first preamble part, and therefore cannot determine an uplink transmit power. In this embodiment of this application, the receive power is determined based on an EHT-STF/EHT-LTF field in a downlink PPDU. This can determine the path loss between the STA and the associated AP, and further determine a power for sending the uplink PPDU to the AP.

The embodiment shown in FIG. 6 may be combined with a manner in which a plurality of APs send a preamble part and a data part in the foregoing specification.

In a multi-AP coordination scenario, each AP repeatedly sends a same first preamble part on a full bandwidth of a channel at a granularity of a channel unit, and separately sends a second preamble part and a data part on a respective RU. In this case, in the embodiment shown in FIG. 6, it is assumed that the first AP sends a second preamble part and a data part of the first PPDU on a first RU. The second AP sends a second preamble part and a data part of the second PPDU on a second RU. The trigger frame in the first PPDU may include only allocation information of the first RU, that is, user information (user info) of the first RU, to indicate a user to which the first RU may be used. Similarly, the trigger frame in the second PPDU may include only allocation information of the second RU, that is, user information (user info) of the second RU, to indicate a user to which the second RU may be used. The user described herein is a station (STA).

Optionally, a function of the trigger frame included in the downlink PPDU in this embodiment of this application may be replaced by carrying a triggered response scheduling (triggered response scheduling, TRS) control field in a MAC frame header.

In the multi-AP coordination scenario, the STA detects the downlink PPDU, where a first preamble part of each downlink PPDU is the same and occupies a same channel, and a second preamble part and a data part are sent by occupying different RUs. Therefore, the STA serving as a receive end needs to correctly receive downlink data sent by an AP associated with the STA. In this embodiment of this application, the STA may determine, by using an RHT-SIG-B field in the first preamble part, an RU on which the second preamble part and the data part are received. Different association identifiers (association identifier, AID) may be allocated to different APs.

For example, an identifier of the first AP is a first AID, and an identifier of the second AP is a second AID. The first preamble parts of the downlink PPDU sent by the first AP and the second AP carry information that the first AID is associated with the first RU and information that the second AID is associated with the second RU. In this way, after receiving the first PPDU sent by the first AP, the first STA may determine, based on the information in the first PPDU, that the second preamble part and the data part of the first PPDU need to be received on the first RU. After receiving the second PPDU sent by the second AP, the second STA may determine, based on the information in the second PPDU, that the second preamble part and the data part of the second PPDU need to be received on the second RU.

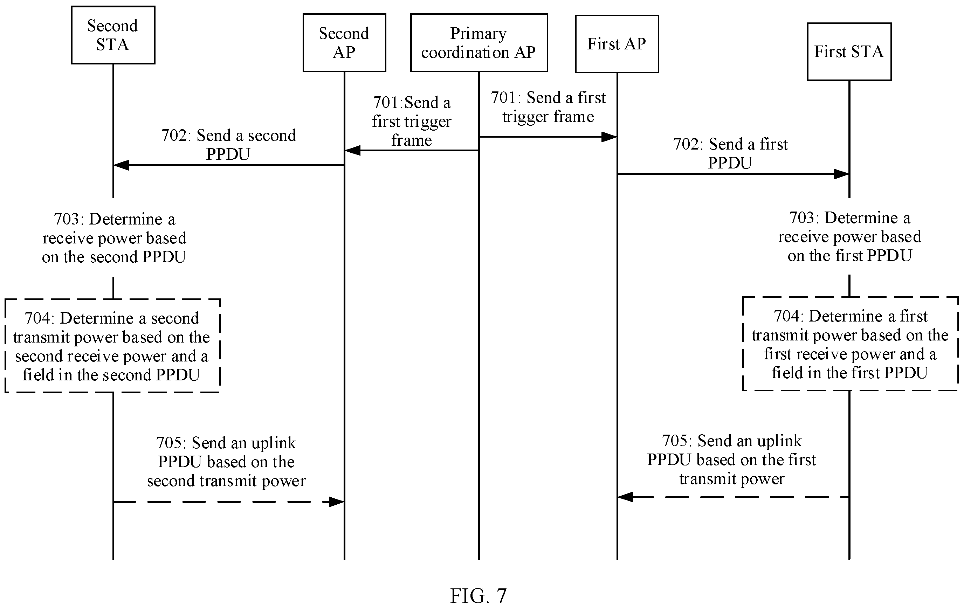

As shown in FIG. 7, an embodiment of this application further provides a third communications method in a wireless local area network. The method may be combined with the foregoing first communications method in a wireless local area network, or may be combined with the foregoing second communications method in a wireless local area network, or may independently form a solution that needs to be protected in this application.

When a plurality of APs coordinately send PPDUs, coordination between the plurality of coordinated (coordinated) APs may be coordinated by using a primary coordination (coordination) AP. The primary coordination AP may be one of the plurality of APs in a multi-AP coordination scenario, or may be an AP other than the plurality of APs. Two APs in the plurality of coordinated APs are still used as an example, including a first AP and a second AP. As shown in FIG. 7, a specific method is described as follows.

S701: A primary coordination AP sends a trigger frame (trigger frame) to a first AP and a second AP, which may be denoted as a first trigger frame. Both the first AP and the second AP receive the first trigger frame from the primary coordination AP.

The first trigger frame may be sent on a full bandwidth of a first channel.

The first trigger frame includes any one or a combination of the following fields: a length of a downlink PPDU, a length of an uplink PPDU, information about a preamble part of the downlink PPDU, or information about a second trigger frame. The downlink PPDU may include the trigger frame, which is denoted as the second trigger frame. The second trigger frame is used to trigger a first STA or a second STA to send the uplink PPDU in a short interframe space (short interframe space, SIFS) after receiving the downlink PPDU.

The downlink PPDU is a PPDU sent by the first AP to the first STA or a PPDU sent by the second AP to the second STA. The uplink PPDU is a PPDU sent by the first STA to the first AP or a PPDU sent by the second STA to the second AP. The first STA is any STA associated with the first AP, and the second STA is any STA associated with the second AP.

The information about the preamble part of the downlink PPDU included in the first trigger frame may include one or more of the following fields: an L-SIGs field, an EHT-SIG-A field, an EHT-SIG-B field, or a quantity of EHT-LTFs. The first AP generates a first preamble part of the first PPDU based on the information about the preamble part of the downlink PPDU included in the first trigger frame. Similarly, the second AP generates a first preamble part of the second PPDU based on the information about the preamble part of the downlink PPDU included in the first trigger frame.

Optionally, after S701, S702 to S705 may be further included. S702 to S705 are the same as S601 to S604. For repetitions, refer to the foregoing description.

With reference to the embodiment shown in FIG. 6, the first AP determines a length of the first PPDU based on the first trigger frame sent by the primary coordination AP. The second AP determines a length of the second PPDU based on the first trigger frame sent by the primary coordination AP.

The first PPDU sent by the first AP to the first STA may include the trigger frame, which is denoted as the second trigger frame. The first AP further determines a length of the first uplink PPDU based on the first trigger frame sent by the primary coordination AP, and the first AP may indicate the length of the first uplink PPDU in the second trigger frame. After receiving the first PPDU, the first STA may determine the length of the first uplink PPDU based on the second trigger frame, and the first STA generates the first uplink PPDU based on the length of the first uplink PPDU and sends the first uplink PPDU to the first AP.

Similarly, the second PPDU sent by the second AP to the second STA may include the trigger frame, or may be denoted as the second trigger frame. The second AP further determines a length of the second uplink PPDU based on the first trigger frame sent by the primary coordination AP, and the second AP may indicate the length of the second uplink PPDU in the second trigger frame. After receiving the second PPDU, the second STA may determine the length of the second uplink PPDU based on the second trigger frame, and the second STA generates the second uplink PPDU based on the length of the second uplink PPDU and sends the second uplink PPDU to the second AP.

In a multi-AP coordination application scenario, first preamble parts in the downlink PPDU sent by the first AP and the second AP are the same, and the first preamble parts need to indicate an association relationship between each AP and an RU. The plurality of coordinated APs may obtain the association relationship between each AP and the RU by using the first trigger frame sent by the primary coordination AP. For example, an identifier of the first AP is a first AID, and an identifier of the second AP is a second AID. The primary coordination AP indicates, in the first trigger frame, that the first AID is associated with a first RU and that the second AID is associated with a second RU. Based on the first trigger frame, the first preamble parts of the downlink PPDU sent by the first AP and the second AP carry information that the first AID is associated with the first RU and information that the second AID is associated with the second RU.

It may be understood that, in the multi-AP coordination application scenario, the AID is globally unique, that is, the AID may distinguish the plurality of coordinated APs.

In this embodiment of this application, the association relationship between the AP and the RU may alternatively be replaced by an association relationship between a BSS and the RU. An AP may have one or more BSSs. Both the AP and the STA may determine, by using the association relationship between the BSS and the RU, an RU associated with the AP and an RU associated with the STA. The AP sends a second preamble part and a data part of a downlink PPDU on the RU associated with the AP. The STA receives the second preamble part and the data part of the downlink PPDU on the RU associated with the STA.

With reference to the example shown in FIG. 4, the following further describes the first to the third communications methods in a wireless local area network by using examples.

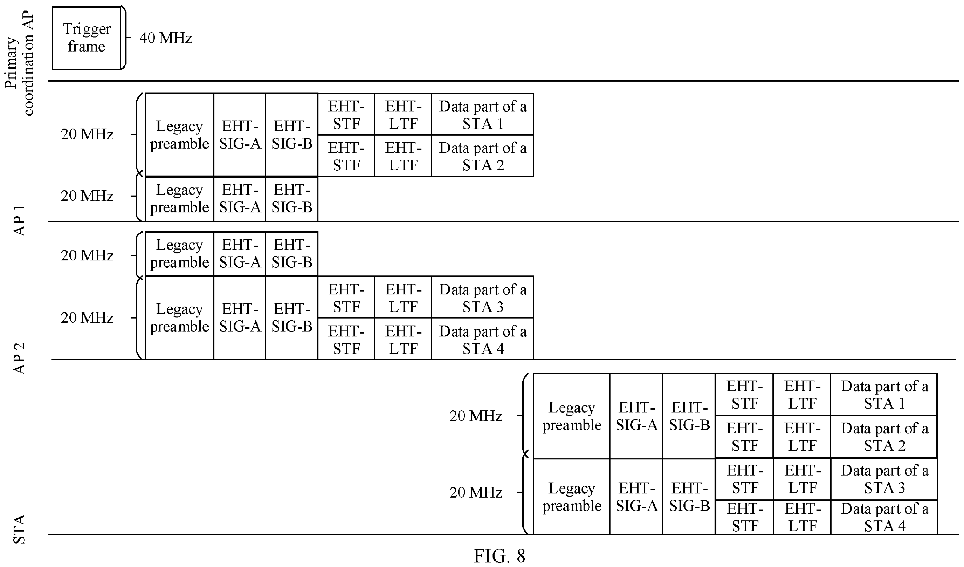

As shown in FIG. 8, a primary coordination AP is configured to coordinate the AP 1 and the AP 2 to coordinate transmission of the PPDU. The primary coordination AP separately sends a first trigger frame to the AP 1 and the AP 2. The primary coordination AP may send the first trigger frame on a bandwidth of 40 MHz. The first trigger frame includes information about some or all preamble part of the first PPDU and the second PPDU. The AP 1 determines the first preamble part of the first PPDU based on the first trigger frame, and the AP 2 determines the first preamble part of the second PPDU based on the first trigger frame. The AP 1 may further determine, based on the first trigger frame, a length of the first PPDU and information about a second trigger frame included in a data part. The AP 2 may further determine, based on the first trigger frame, a length of the second PPDU and the information about the second trigger frame included in the data part.

For a method for sending a downlink PPDU by the AP 1 and the AP 2, refer to the description in FIG. 4. After receiving the downlink PPDU, the STA 1 to the STA 4 separately send an uplink PPDU. A manner in which the uplink PPDU is sent is not limited in this application. Optionally, as shown in FIG. 8, STAs send a first preamble part of the uplink PPDU on both the channel element 1 and the channel element 2 in a joint sending manner, and separately send a second preamble part and a data part of the uplink PPDU on respective RUs. The data part sent by each STA includes uplink data sent by the STA to the AP.

Then, the AP 1 and the AP 2 continue to send downlink PPDUs, and each STA continues to send an uplink PPDU. The sending manner is the same as that described above. Details are not described herein again. Optionally, after receiving the uplink PPDU, the AP 1 and the AP 2 may return a block acknowledgment (block ACK) BA frame. The BA frame is carried in a data part of the downlink PPDU.

Optionally, downlink PPDUs initially sent by the AP 1 and the AP 2 may not include downlink data, and only the data part carries the first trigger frame.

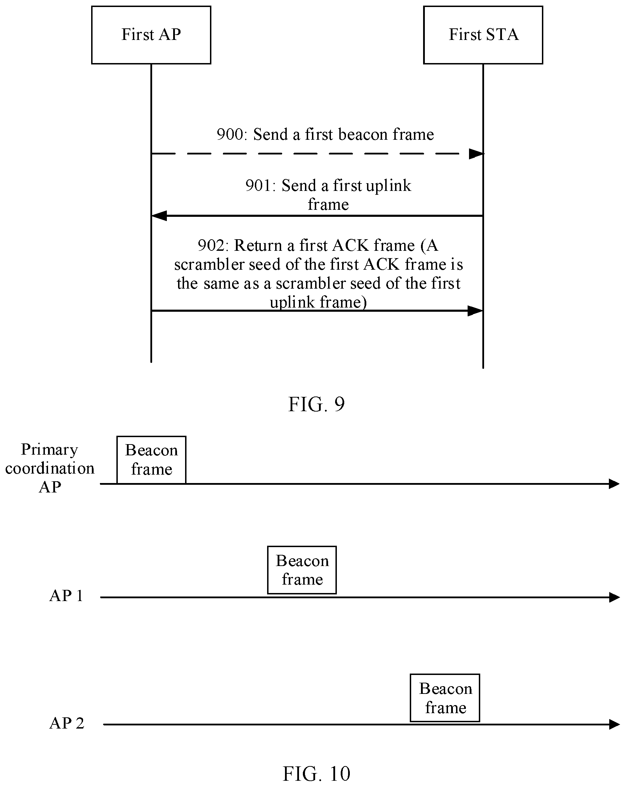

As shown in FIG. 9, an embodiment of this application further provides a fourth communications method in a wireless local area network. Details are as follows.

S901: The first STA sends a first uplink frame to the first AP, and the first AP receives the first uplink frame from the first STA.

S902: The first AP returns a first acknowledgment (acknowledge, ACK) frame to the first STA.

A scrambler seed of the first ACK frame is the same as a scrambler seed of the first uplink frame.

In a multi-AP coordination scenario, any AP may correctly receive an uplink frame sent by a STA. It is assumed that both the first AP and a second AP receive the first uplink frame sent by the first STA, and after receiving the first uplink frame, the first AP and the second AP return ACK frames after an SIFS. Scrambler seeds of the two ACK frames are the same as the scrambler seed of the first uplink frame. This can avoid interference to PPDUs of the two ACK frames caused by using different scrambling codes, and ensure that the STA can correctly receive the ACK frames.

Optionally, the first uplink frame includes a BSS identifier (ID), and the BSS ID, namely, an ID shared by the first AP and the second AP, is used to identify the first AP and the second AP.

Optionally, before S901, S900 is further included.

S900: The first AP sends a first beacon frame to the first STA.

The first beacon frame includes BSS information of the first AP, and the BSS information of the first AP is the same as BSS information of the second AP.

The following describes some possible designs in the multi-AP (multi-AP) coordination scenario. This part of design may form a protection solution in combination with any embodiment provided in this application, or may form a protection solution independently.

The first AP sends a request frame to one or more second APs, where the request frame is used to request to establish a multi-AP coordination group. The second AP may be an AP adjacent to the first AP. After receiving the request frame, the second AP determines, based on a capability or willingness of the second AP, whether to agree to join the multi-AP coordination group. The second AP returns a response frame to the first AP. The response frame may include any one or more of information used to indicate whether the second AP agrees to join the multi-AP coordination group, capability information of the second AP, or information about a neighboring AP that can be detected by the second AP.

The first AP determines, based on the response frame returned by the second AP, whether the second AP agrees to join the multi-AP coordination group. If the first AP determines that the second AP agrees to join the multi-AP coordination group, the first AP sends one or more of the following information to the second AP: information such as a primary coordination (coordination) AP corresponding to the multi-AP coordination group, a BSS identifier (ID) and a BSS color (color) corresponding to the multi-AP coordination group.

The BSS in the multi-AP coordination group includes BSSs of all APs in the entire multi-AP coordination group. For ease of description, the BSS in the multi-AP coordination group may be referred to as a virtual (virtual) BSS.

In a possible implementation, a BSS ID of the virtual BSS is a BSS ID of the coordinationAP. The BSS color corresponding to the multi-AP collaboration group is the BSS color of the coordination AP.

BSSs in the multi-AP collaboration group share an AID space. In one case, the STA may associate with the virtual BSS and associate with a member BSS in the multi-AP collaboration group, and maintain two sets of keys. In this case, the member BSS associated with the STA is a receiving AP corresponding to the STA during uplink multiuser (multiple users, MU) transmission.

In another case, the STA is associated with only the virtual BSS, and the STA derives keys only with the coordination AP. All encryption and decryption operations are performed on the coordination AP. Therefore, only one set of keys is required. In addition, in this case, when associating with the virtual BSS, the STA needs to learn an anchor (anchor) AP of the STA. The anchor AP is the receiving AP corresponding to the STA during uplink MU transmission. Optionally, the anchor AP of the STA may send a trigger frame to the STA, where the trigger frame carries user information of the STA. If the trigger frame received by the STA from an AP carries the user information of the STA, the STA determines that the AP is the anchor AP of the STA.

The following describes how a STA obtains virtual BSS information, or how an AP in the multi-AP collaboration group notifies the STA of the virtual BSS information.

In a possible implementation, as shown in FIG. 10, each AP separately sends a beacon (beacon) frame, and the beacon frame carries an element used to indicate the virtual BSS information.

For example, the virtual BSS information may be indicated by using a multiple BSS ID information element (element) or a neighbor report information element (neighbor report element) in the beacon frame. Optionally, if the coordination AP also serves as a common AP in the multi-AP coordination group, the coordination AP also sends the beacon frame.

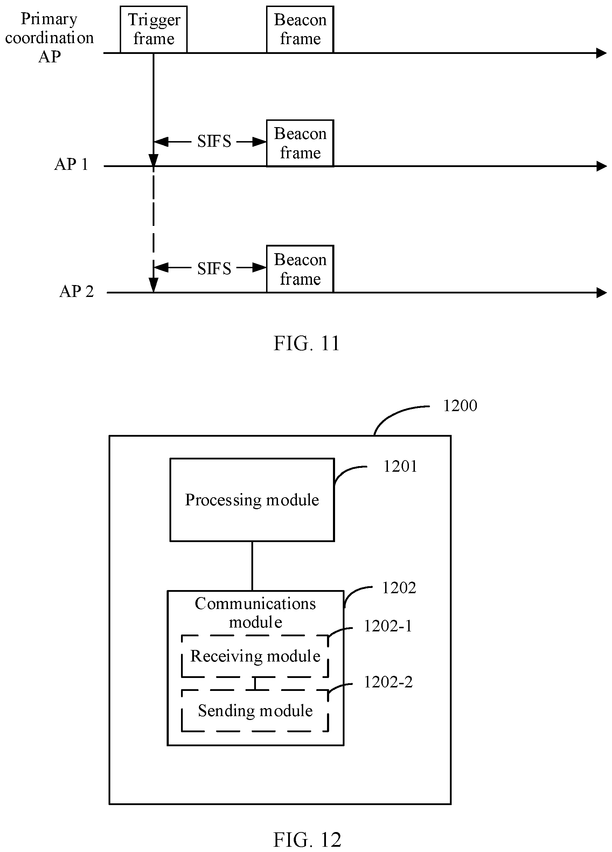

In another possible implementation, as shown in FIG. 11, the coordination AP sends a trigger frame (trigger frame) to a member AP in the multi-AP coordination group. A sequence number (Sequence number, SN) carried in the trigger frame is used to indicate a frame in which member APs jointly send the virtual BSS information. After receiving the SIFS after the trigger frame based on the trigger frame, the member AP sends the beacon frame including the virtual BSS information. Optionally, if the coordination AP also serves as a common AP in the multi-AP coordination group, the coordination AP also sends, after the SIFS, the beacon frame including the virtual BSS information.

It should be noted that the examples in each application scenario in this application show only some possible implementations, to better understand and describe the method in this application. Persons skilled in the art may obtain examples of some evolution forms according to the reference signal indication method provided in this application.

In the foregoing embodiments provided in this application, the methods provided in embodiments of this application are separately described from a perspective of an AP, a STA, and interaction between a STA and an AP. To implement the functions in the method provided in embodiments of this application, the STA and the AP may include a hardware structure and/or a software module, to implement the foregoing functions by using the hardware structure, the software module, or a combination of the hardware structure and the software module. Whether a function in the foregoing functions is executed in a manner in which a hardware structure, a software module, or a hardware structure plus a software module is used depends on a specific application and a design constraint condition of the technical solution.

As shown in FIG. 12, based on a same technical concept, an embodiment of this application further provides a communications apparatus 1200. The communications apparatus 1200 may be a STA or an AP, or may be an apparatus in a STA or an AP, or an apparatus that can be used with a STA or an AP. In a design, the communications apparatus 1200 may include a module that is in a one-to-one correspondence with the methods/operations/steps/actions performed by the STA or the AP in the foregoing method embodiments. The module may be implemented by a hardware circuit, software, or a combination of a hardware circuit and software. In a design, the communications apparatus may include a processing module 1201 and a communications module 1202. The processing module 1201 is configured to invoke the communications module 1202 to perform a receiving and/or sending function.

When the apparatus is used to perform the method performed by the STA,
the communications module 1202 is configured to receive a first physical layer protocol data unit PPDU from a first access point AP. The processing module 1201 is configured to determine a receive power based on a preamble field in the first PPDU, where the preamble field includes one or more of the following fields: an extremely high-throughput short training field EHT-STF or an extremely high-throughput long training field EHT-LTF.

The processing module 1201 and the communications module 1202 may be further configured to perform other corresponding steps or operations performed by the STA in the foregoing method embodiments. Details are not described herein again.

When the apparatus is used to perform the method performed by the primary coordination AP,
the processing module 1201 is configured to invoke the communications module 1202 to send a first trigger frame to both a first AP and a second AP on a first channel. The first trigger frame is used to trigger the first AP and the second AP to send a downlink PPDU after a short frame interval SIFS after receiving the first trigger frame. The first trigger frame includes one or more of the following: a length of the downlink PPDU, a length of an uplink PPDU, information about a preamble part of the downlink PPDU, or information about a second trigger frame, where the downlink PPDU is a PPDU sent by the first AP to a first STA or a PPDU sent by the second AP to a second STA, and the uplink PPDU is a PPDU sent by the first STA to the first AP or a PPDU sent by the second STA to the second AP. The downlink PPDU includes the second trigger frame, and the second trigger frame is used to trigger the first STA or the second STA to send the uplink PPDU after the SIFS after the downlink PPDU ends.

The processing module 1201 and the communications module 1202 may be further configured to perform other corresponding steps or operations performed by the primary coordination AP in the foregoing method embodiments. Details are not described herein again.

When the apparatus is used to perform the method performed by the first AP,
the communications module 1202 may further include a receiving module 1202-1 and a sending module 1202-2.

The receiving module 1202-1 is configured to receive a first uplink frame from a first STA. The sending module 1202-2 is configured to return a first acknowledgment ACK frame to the first STA, where a scrambler seed of the first ACK frame is the same as a scrambler seed of the first uplink frame.

The processing module 1201, the communications module 1202, the receiving module 1202-1, or the sending module 1202-2 may be further configured to perform other corresponding steps or operations performed by the first AP in the foregoing method embodiment. Details are not described herein again.

Division into modules in this embodiment of this application is an example, is merely logical function division, and may be other division in an actual implementation. In addition, functional modules in embodiments of this application may be integrated into one processor, or each of the modules may exist alone physically, or two or more modules are integrated into one module. The integrated module may be implemented in a form of hardware, or may be implemented in a form of a software functional module.

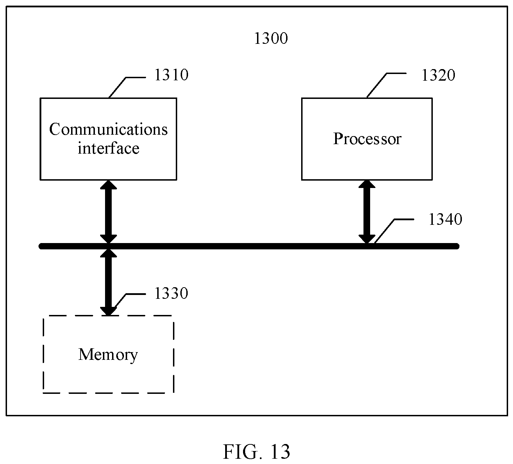

FIG. 13 shows a communications apparatus 1300 according to an embodiment of this application. The communications apparatus 1300 is configured to implement a function of a STA or an AP in the foregoing method. When implementing a function of the STA, the communications apparatus may be a STA, an apparatus in a STA, or an apparatus that can be used with a STA. When implementing a function of the AP, the apparatus may be an AP, an apparatus in an AP, or an apparatus that can be used with an AP. The communications apparatus may be a chip system. In this embodiment of this application, the chip system may include a chip, or may include a chip and another discrete device. The communications apparatus 1300 includes at least one processor 1320. The processor 1320 is configured to implement a function of the STA or the AP in the method provided in embodiments of this application. The communications apparatus 1300 may further include a communications interface 1310. In this embodiment of this application, the communications interface 1310 may be a transceiver, a circuit, a bus, a module, or a communications interface of another type, and is configured to communicate with another device through a transmission medium. For example, the communications interface 1310 is used by an apparatus in the apparatus 1300 to communicate with another device. For example, when the communications apparatus 1300 is a STA, the another device may be an AP. When the communications apparatus 1300 is anAP, the another apparatus may be a STA. The processor 1320 receives and sends data by using the communications interface 1310, and is configured to implement the method in the foregoing method embodiments.

For example, when implementing a function of the STA, the processor 1320 is configured to receive a first physical layer protocol data unit PPDU from a first access point AP by using the communications interface 1310. The processor 1320 is further configured to determine a receive power based on a preamble field in the first PPDU, where the preamble field includes one or more of the following fields: an extremely high-throughput short training field EHT-STF or an extremely high-throughput long training field EHT-LTF.

When implementing a function of the AP, the AP is a primary coordination AP, and the processor 1320 is configured to send a first trigger frame to both the first AP and a second AP on a first channel by using the communications interface 1310. The first trigger frame is used to trigger the first AP and the second AP to send a downlink PPDU after a short frame interval SIFS after receiving the first trigger frame. The first trigger frame includes one or more of the following: a length of the downlink PPDU, a length of an uplink PPDU, information about a preamble part of the downlink PPDU, or information about a second trigger frame, where the downlink PPDU is a PPDU sent by the first AP to a first STA or a PPDU sent by the second AP to a second STA, and the uplink PPDU is a PPDU sent by the first STA to the first AP or a PPDU sent by the second STA to the second AP. The downlink PPDU includes the second trigger frame, and the second trigger frame is used to trigger the first STA or the second STA to send the uplink PPDU after the SIFS after the downlink PPDU ends.

Alternatively, when implementing a function of the AP, the AP is a first AP, and the processor 1320 is configured to: receive, by using the communications interface 1310, a first uplink frame from the first STA, and return a first acknowledgment ACK frame to the first STA. A scrambler seed of the first ACK frame is the same as a scrambler seed of the first uplink frame.

The processor 1320 and the communications interface 1310 may be further configured to perform other corresponding steps or operations performed by the STA or the AP in the foregoing method embodiments. Details are not described herein again.

The communications apparatus 1300 may further include at least one memory 1330, configured to store program instructions and/or data. The memory 1330 is coupled to the processor 1320. Coupling in this embodiment of this application is indirect coupling or a communications connection between apparatuses, units, or modules, may be electrical, mechanical, or in another form, and is used for information exchange between the apparatuses, the units, and the modules. The processor 1320 may operate in collaboration with the memory 1330. The processor 1320 may execute the program instructions stored in the memory 1330. At least one of the at least one memory may be included in the processor.

A specific connection medium between the communications interface 1310, the processor 1320, and the memory 1330 is not limited in embodiments of this application. In this embodiment of this application, in FIG. 13, the memory 1330, the processor 1320, and the communications interface 1310 are connected through a bus 1340. The bus is represented by using a thick line in FIG. 13. A manner in which other components are connected is merely an example for description, and is not limited thereto. The bus may be classified into an address bus, a data bus, a control bus, and the like. For ease of representation, only one thick line is used to represent the bus in FIG. 13, but this does not mean that there is only one bus or only one type of bus.

When the communications apparatus 1200 and the communications apparatus 1300 are specifically chips or chip systems, the communications module 1202 and the communications interface 1310 may output or receive a baseband signal. When the communications apparatus 1200 and the communications apparatus 1300 are specifically devices, the communications module 1202 and the communications interface 1310 may output or receive a radio frequency signal. In this embodiment of this application, the processor may be a general-purpose processor, a digital signal processor, an application-specific integrated circuit, a field programmable gate array or another programmable logic device, a discrete gate or transistor logic device, or a discrete hardware component. The processor can implement or execute the methods, steps, and logical block diagrams disclosed in embodiments of this application. The general purpose processor may be a microprocessor or any conventional processor or the like. The steps of the method disclosed with reference to embodiments of this application may be directly performed by a hardware processor, or may be performed by using a combination of hardware and software modules in the processor.

In embodiments of this application, the memory 1330 may be a non-volatile memory, for example, a hard disk drive (hard disk drive, HDD) or a solid-state drive (solid-state drive, SSD), or may be a volatile memory (volatile memory), for example, a random access memory (random-access memory, RAM). The memory is any other medium that can be used to carry or store expected program code in a form of an instruction or a data structure and that can be accessed by a computer. However, this is not limited thereto. The memory in embodiments of this application may alternatively be a circuit or any other apparatus that can implement a storage function, and is configured to store program instructions and/or data.

Some or all of the operations and functions performed by the STA or some or all of the operations and functions performed by the AP described in the foregoing method embodiments of this application may be implemented by using a chip or an integrated circuit.

To implement functions of the communications apparatus in FIG. 12 or FIG. 13, an embodiment of this application further provides a chip, including a processor, configured to support the communications apparatus in implementing functions related to the STA or the AP in the foregoing method embodiments. In a possible design, the chip is connected to a memory or the chip includes a memory, and the memory is configured to store program instructions and data that are necessary for the communications apparatus.

An embodiment of this application provides a computer-readable storage medium, and stores a computer program. The computer program includes instructions used to perform the foregoing method embodiments.

An embodiment of this application provides a computer program product that includes instructions. When the computer program product runs on a computer, the computer is enabled to perform the methods in the foregoing aspects.

Persons skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processor of another programmable data processing device to generate a machine, so that the instructions executed by a computer or the processor of another programmable data processing device generate an apparatus for implementing a specific function in one or more processes in the flowcharts and/or in one or more blocks in the block diagrams.

These computer program instructions may be stored in a computer-readable memory that can indicate the computer or the another programmable data processing device to work in a specific manner, so that the instructions stored in the computer-readable memory generate an artifact that includes an instruction apparatus. The instruction apparatus implements the specific function in one or more processes in the flowcharts and/or in one or more blocks in the block diagrams.

These computer program instructions may be loaded onto a computer or another programmable data processing device, so that a series of operation steps are performed on the computer or another programmable device, thereby generating computer-implemented processing. Therefore, the instructions executed on the computer or another programmable device provide steps for implementing a specific function in one or more processes in the flowcharts and/or in one or more blocks in the block diagrams.

Although some embodiments of this application have been described, persons skilled in the art can make changes and modifications to these embodiments once they learn the basic inventive concept. Therefore, the following claims are intended to be construed as to cover the preferred embodiments and all changes and modifications falling within the scope of this application.

Obviously, persons skilled in the art can make various modifications and variations to embodiments of this application without departing from the spirit and scope of embodiments of this application. This application is intended to cover these modifications and variations of embodiments of this application provided that they fall within the scope of protection defined by the following claims and their equivalent technologies.

## Claims

1. A wireless local area network communications method, comprising:
receiving, by a first station STA, a first physical layer protocol data unit PPDU from a first access point AP; and
determining, by the first STA, a receive power based on a preamble field in the first PPDU, wherein the preamble field comprises one or more of the following fields: an extremely high-throughput short training field EHT-STF or an extremely high-throughput long training field EHT-LTF.

2. The method according to claim 1, wherein the method further comprises:
determining, by the first STA, a path loss between the first STA and the first AP based on the receive power; and
determining, by the first STA, an uplink transmit power based on the path loss.

3. The method according to claim 2, wherein the determining, by the first STA, a path loss between the first STA and the first AP based on the receive power comprises:
determining, by the first STA, the path loss between the first STA and the first AP based on the receive power and a first field in the first PPDU, wherein the first field comprises an AP transmit power field.

4. The method according to claim 2 or 3, wherein the determining, by the first STA, an uplink transmit power based on the path loss comprises:
determining, by the first STA, the uplink transmit power based on the path loss and a second field in the first PPDU, wherein the second field comprises an uplink target received signal strength indicator RSSI field.

5. The method according to any one of claims 1 to 4, wherein the receiving, by a first STA, a first PPDU from a first access point AP comprises:
receiving, by the first STA, a first preamble part of the first PPDU on each channel element of a first channel, and receiving, on a first resource unit RU of the first channel, a second preamble part and a first data part of the first PPDU, wherein the second preamble part comprises the preamble field; and
determining, by the first STA based on a third field in the first preamble part, to receive, on the first RU, the second preamble part and the first data part of the first PPDU, wherein the third field comprises an association identifier AID field of the first AP.

6. A wireless local area network communications method, comprising:
sending, by a primary coordination access point AP, a first trigger frame to both a first AP and a second AP on a first channel, wherein the first trigger frame is used to trigger the first AP and the second AP to send a downlink PPDU after a short interframe space SIFS after receiving the first trigger frame; and
the first trigger frame comprises one or more of the following: a length of the downlink PPDU, a length of an uplink PPDU, information about a preamble part of the downlink PPDU, or information about a second trigger frame, wherein the downlink PPDU is a PPDU sent by the first AP to a first STA or a PPDU sent by the second AP to a second STA, the uplink PPDU is a PPDU sent by the first STA to the first AP or a PPDU sent by the second STA to the second AP, the downlink PPDU comprises the second trigger frame, and the second trigger frame is used to trigger the first STA or the second STA to send the uplink PPDU after the SIFS after the downlink PPDU ends.

7. The method according to claim 6, wherein the information about the preamble part of the downlink PPDU comprises one or more of the following fields: a legacy signal L-SIG field, an extremely high-throughput EHT signal A field, an EHT signal B field, or a quantity of extremely high-throughput long training fields EHT-LTFs.

8. A wireless local area network communications method, comprising:
receiving, by a first access point AP, a first uplink frame from a first STA; and
returning, by the first AP, a first acknowledgment ACK frame to the first STA, wherein a scrambler seed of the first ACK frame is the same as a scrambler seed of the first uplink frame.

9. The method according to claim 8, wherein the first uplink frame comprises a basic service set BSS identifier, wherein
the BSS identifier is used to identify the first AP and a second AP.

10. The method according to claim 8 or 9, wherein before the receiving, by a first AP, a first uplink frame from a first STA, the method further comprises:
sending, by the first AP, a first beacon frame to the first STA, wherein the first beacon frame comprises basic service set BSS information of the first AP, and the BSS information of the first AP is the same as BSS information of the second AP.

11. A wireless local area network communications apparatus, comprising a processor and a communications interface, wherein the communications interface is configured to communicate with another communications apparatus; and the processor is configured to run a group of programs, to enable the wireless local area network communications apparatus to implement the method according to any one of claims 1 to 5.

12. A wireless local area network communications apparatus, comprising a processor and a communications interface, wherein the communications interface is configured to communicate with another communications apparatus; and the processor is configured to run a group of programs, to enable the wireless local area network communications apparatus to implement the method according to claim 6 or 7 or implement the method according to any one of claims 8 to 10.

13. A computer-readable storage medium, wherein the computer storage medium stores computer-readable instructions, and when the computer-readable instructions are run on a communications apparatus, the communications apparatus is enabled to perform the method according to any one of claims 1 to 5.

14. A computer-readable storage medium, wherein the computer storage medium stores computer-readable instructions, and when the computer-readable instructions are run on a communications apparatus, the communications apparatus is enabled to perform the method according to any one of claim 6 or 7 or the method according to any one of claims 8 to 10.
